# EUROPEAN PATENT SPECIFICATION

(11) **EP 4 520 701 B1**
(45) Date of publication and mention of the grant of the patent: **16.09.2026**
(21) Application number: 24195568.1
(22) Date of filing: 21.08.2024
(51) Int. Cl.: B65H 67/06, B25J 5/00, D01H 9/10

(54) **TRANSFER VEHICLE**
TRANSFERFAHRZEUG
VÉHICULE DE TRANSFERT

(30) Priority: 08.09.2023 CN 202311162858; 08.09.2023 CN 202322450135 U
(43) Date of publication of application: 12.03.2025
(73) Proprietor: Zhejiang Hengyi Petrochemical Co., Ltd., Zhejiang 311200 (CN); Zhejiang Shuangtu New Materials Co., Ltd., Hangzhou, Zhejiang 311255 (CN)
(72) Inventor: WANG, Peng, Hangzhou, 311200 (CN); PENG, Xiantao, Hangzhou, 311200 (CN); LI, Dake, Hangzhou, 311200 (CN); JIANG, Dong, Hangzhou, 311200 (CN); FENG, Chun, Hangzhou, 311200 (CN); LI, Weike, Hangzhou, 311200 (CN); WANG, Jian, Hangzhou, 311200 (CN); XU, Renfang, Hangzhou, 311200 (CN)
(74) Representative: HGF

(56) References cited:
- EP-A2- 0 628 648
- EP-A2- 0 678 469
- CN-A- 111 776 878
- DE-U1- 9 111 142
- US-A- 4 039 092
- US-A- 4 669 942

## Description

The present disclosure relates to the field of chemical fiber production technology, and in particular to a transfer vehicle.

### BACKGROUND

US 4 039 092 A relates to a bobbin package storage box which is movable on at least one rail and provided with an endless chain revolving in a substantially vertical plane. A bobbin transfer point associated with a winding machine is located at a region along the path of travel of the chain. Bolts or pins provided on the chain support full textile bobbin packages. The chain extends substantially parallel to the longitudinal direction or the direction of movement respectively, of the storage box, and the position of the bolts at the bobbin transfer point is variable while the bolts in an idling position are maintained in a predetermined position.

The yarn spindles produced by a winder need to be dropped and transferred. When the yarn spindles of a whole rod are taken out from the winder at one time, a material receiving rod with the same width as the yarn spindles of the whole rod is required to dock with the yarn rod of the winder in the same direction. As a result, the size of the entire yarn receiving and transferring mechanism or the transfer vehicle is too wide, and the working channel is seriously occupied during operation, making it impossible for personnel and other material receiving mechanisms to pass through.

### SUMMARY

The embodiments of the present disclosure provide a transfer vehicle, to solve or alleviate one or more technical problems in the prior art.

The present invention provides a transfer vehicle, including:
a vehicle body;
a rotating mechanism, including an annular track vertically arranged above the vehicle body, a crawler belt arranged along an end surface of the annular track, and a first driving device connected to the crawler belt; where the crawler belt is rotatable around the annular track when driven by the first driving device;
a plurality of material receiving rods arranged at intervals on a side of the rotating mechanism, where each material receiving rod includes an inner rod and an outer rod sleeved on the inner rod, and the inner rod is connected to the crawler belt;
a docking auxiliary mechanism arranged beside a docking station on the side of the rotating mechanism, including a pushing device and a positioning device, where the positioning device is configured to determine an orientation of a target docking position; the pushing device includes a push-pull rod and a second driving device, and a rear end of the push-pull rod is connected to the second driving device; when the material receiving rod rotates to the docking station, the second driving device drives a front end of the push-pull rod to push the outer rod to move horizontally together, so that the outer rod moves to the target docking position to receive materials to be transferred; and
a control mechanism electrically connected to the vehicle body and the positioning device respectively, and configured to control movement of the vehicle body and adjust a position of the vehicle body according to the orientation of the target docking position so that the docking station is aligned with the target docking position.

In an implementation, a lug boss is provided at a rear end of the outer rod; and when the material receiving rod rotates to the docking station, the front end of the push-pull rod corresponds to a position of the lug boss, and the second driving device drives the front end of the push-pull rod to extend horizontally and push the lug boss, to drive the outer rod to move horizontally.

In an implementation, the outer rod includes a plurality of expansion pieces with arc-shaped cross-sections, the expansion pieces have rear ends connected to each other and front ends separated from each other, and the rear ends of the expansion pieces are connected to the lug boss; when the outer rod and the inner rod are in a first state relative to each other, the front ends of the plurality of expansion pieces shrink and draw close; when the outer rod and the inner rod are in a second state relative to each other, the front ends of the plurality of expansion pieces move away from each other to increase a diameter of the outer rod.

In an implementation, the inner rod has a conical portion at its front end, the conical portion is slidably arranged inside the outer rod, and a diameter of the conical portion gradually increases from its front end to rear end; and a thickness of the expansion piece gradually decreases from its front end to rear end, so that an inner diameter of the front end is less than an inner diameter of the rear end in the outer rod; where: when the rear end of the outer rod slides to the conical portion of the inner rod, the outer rod and the inner rod are in the first state relative to each other; when the front end of the outer rod slides to the conical portion of the inner rod, the outer rod and the inner rod are in the second state relative to each other.

In an implementation, the pushing device further includes a push-pull groove arranged at the front end of the push-pull rod, the push-pull groove is arranged parallel to a movement direction of a material receiving rod at the docking station, and a lower part of the lug boss of the material receiving rod is placed in the push-pull groove when the material receiving rod moves to the docking station.

In an implementation, the docking auxiliary mechanism includes a first box body, the pushing device and the positioning device are arranged in the first box body, and the first box body is arranged between the vehicle body and the rotating mechanism.

In an implementation, a mounting groove is arranged on a side of the first box body close to a front end of the outer rod, the positioning device is arranged on a first inclined surface of the mounting groove, the first inclined surface is arranged toward the front end of the outer rod, and the positioning device includes a camera.

In an implementation, a first connecting column is provided between inner circles of the annular track, and the first connecting column is connected to the vehicle body through a second connecting column.

In an implementation, the first driving device is arranged in a second box body between the vehicle body and the rotating mechanism.

The above-mentioned technical solution used in the embodiment of the present disclosure can reduce the size of the transfer vehicle and reduce the occupancy of the working channel.

### BRIEF DESCRIPTION OF THE DRAWINGS

In the accompanying drawings, the same reference numbers represent the same or similar parts or elements throughout the accompanying drawings, unless otherwise specified. These accompanying drawings are not necessarily drawn to scale. It should be understood that these accompanying drawings only depict some embodiments provided according to the present invention, and should not be considered as limiting the scope of the present invention.
FIG. 1 is a perspective structural diagram of a transfer vehicle according to an embodiment of the present disclosure.
FIG. 2 illustrates a side cross-sectional view of the transfer vehicle at a docking station according to an embodiment of the present disclosure.

Reference numerals in the accompanying drawings: 10. vehicle body, 20. rotating mechanism, 21. annular track, 22. crawler belt, 30. docking auxiliary mechanism, 31. pushing device, 32. positioning device, 33. first box body, 311. push-pull rod, 312. second driving device, 313. push-pull groove, 314. limit block, 40. first driving device, 50. material receiving rod, 51. inner rod, 52. lug boss, 53. outer rod, 511. conical portion, 531. expansion piece, 60. docking station.

### DETAILED DESCRIPTION

Hereinafter, only certain exemplary embodiments are briefly described. As those skilled in the art would realize, the described embodiments may be modified in various different ways without departing from the scope of the present disclosure. Thus, the accompanying drawings and description are considered to be illustrative rather than restrictive in nature.

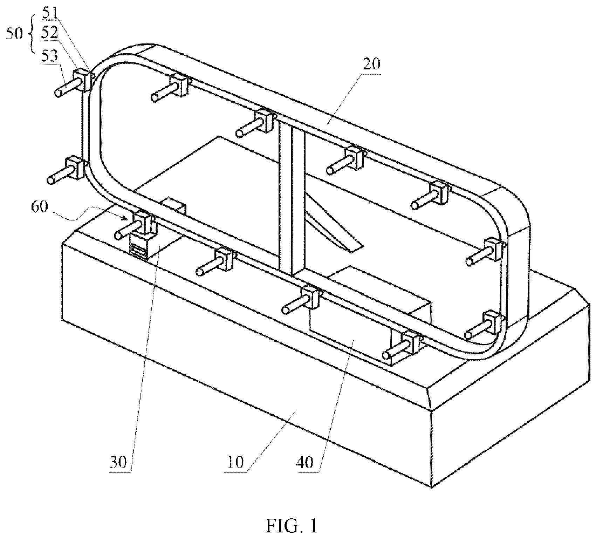

FIG. 1 is a perspective structural diagram of a transfer vehicle according to an embodiment of the present disclosure. As shown in FIG. 1, the transfer vehicle includes:
A vehicle body 10.

In an embodiment of the present disclosure, the vehicle body may be an Automated Guided Vehicle (AGV), for example, an inertial navigation AGV, a QR code navigation AGV, a laser navigation AGV, a GPS navigation AGV, etc. The vehicle body 10 is configured to move to a designated material receiving position according to a material receiving instruction, and any vehicle body having this capability can be used as the vehicle body in the embodiment of the present disclosure. The material receiving position is also called the target docking position, and is usually the material drop position of the material to be transferred. In one example, the target docking position is the doffing position of the winder in the chemical fiber production equipment.

A rotating mechanism 20 includes an annular track 21 vertically arranged above the vehicle body 10, a crawler belt 22 arranged along an end surface of the annular track 21, and a first driving device 40 connected to the crawler belt 22. Here, the crawler belt 22 is rotatable around the annular track 21 when driven by the first driving device 40.

In an embodiment of the present disclosure, the long side of the rotating mechanism 20 is arranged in the same direction as the long side of the vehicle body 10 and is close to the end edge on the short side of the vehicle body 10, so that the rotating mechanism 20 is closer to the direction of the target docking position when receiving the material to be transferred. This direction is called the docking direction. When receiving materials, the long side direction of the vehicle body 10 and the rotating mechanism 20 is perpendicular to the direction of the screw rod of the winder, that is, the docking direction is the short side direction of the vehicle body, reducing the size and space occupancy of the vehicle body in the docking direction.

The shape of the annular track 21 in the rotating mechanism 20 may be a rounded rectangle, a straight-sided ellipse, a circle or other annular shape. The vertical arrangement of the annular track 21 can make full use of the vertical space and reduce the length of the transfer vehicle, so as to reduce the obstruction of the doffing positions of other winders by the previous transfer vehicle during operation when a plurality of adjacent winders need to unload materials at the same time.

In one example, the annular track 21 has an inner layer and an outer layer, and the crawler belt 22 is sandwiched between the inner layer and the outer layer of the annular track 21. In another example, the crawler belt 22 is disposed on the inner circle or the outer circle of the annular track 21. The crawler belt 22 may slide on the annular track 21 without being separated therefrom. The crawler belt 22 includes a plurality of links (also called plates or chain rings) connected end to end, and these links are connected together to form a ring. Each link has a certain curvature to adapt to the curved portion of the annular track 21. These links may be made of metal, rubber, or other materials.

A plurality of material receiving rods 50 are arranged at intervals on a side of the rotating mechanism 20, the material receiving rod 50 includes an inner rod 51 and an outer rod 53 sleeved on the inner rod 51, and the inner rod 51 is connected to the crawler belt 22.

In an embodiment of the present disclosure, the plurality of material receiving rods are arranged at equal intervals on the side of the rotating mechanism 20 and specifically on one side in the docking direction. The inner rod 51 is fixedly connected to the crawler belt 22. The number of material receiving rods 50 matches the number of materials to be transferred at one time. In one example, the winder can produce 12 yarn spindles at the same time, that is, 12 yarn spindles need to be transferred at one time, so the number of material receiving rods 50 is at least 12.

A docking auxiliary mechanism 30 is arranged beside a docking station 60 on the side of the rotating mechanism 20, and includes a pushing device 31 and a positioning device 32. The positioning device 32 is configured to determine the orientation of a target docking position. The pushing device 31 includes a push-pull rod 311 and a second driving device 312, and a rear end of the push-pull rod 311 is connected to the second driving device 312. When the material receiving rod 50 rotates to the docking station 60, the second driving device 312 drives a front end of the push-pull rod 311 to push the outer rod 53 to move horizontally together, so that the outer rod 53 moves to the target docking position to receive the materials to be transferred.

In an embodiment of the present disclosure, the docking station 60 refers to a preparation area for docking the material receiving rod 50 with the target docking position. Specifically, the docking station 60 is arranged at the position where the docking auxiliary mechanism 30 is located. Under the drive of the rotating mechanism 20, one of the material receiving rods 50 reaches the position where the docking auxiliary mechanism 30 is located, and is further docked with the target docking position with the assistance of the docking auxiliary mechanism 30. The pushing device 31 is configured to drive the outer rod 53 to move forward and backward in the above-mentioned docking direction. The positioning device 32 can determine the orientation of the target docking position by optical means, and a marker that facilitates optical positioning can be set at the target docking position.

A control mechanism is electrically connected to the vehicle body 10 and the positioning device 32 respectively, and is configured to control the movement of the vehicle body 10 and adjust a position of the vehicle body 10 according to the orientation of the target docking position determined by the positioning device 32, so that the docking station 60 is aligned with the target docking position.

In an embodiment of the present disclosure, after the vehicle body 10 moves next to the target winder, the control mechanism determines the orientation information of the target docking position through the positioning device 32, generates a position adjustment instruction and sends it to the vehicle body 10; and the vehicle body 10 further adjusts its own position to align the docking station 60 with the target docking position.

According to the solution of the embodiment of the present disclosure, the transfer vehicle for receiving yarns is changed from receiving yarns in the longitudinal direction of the screw rod of the winder to receiving yarns one by one in the vertical direction, thereby reducing the lateral size of the transfer vehicle for receiving yarns, and reducing the occupancy of the working channel by the transfer vehicle for receiving yarns. At the same time, the material receiving rods are rotated circularly in the vertical direction through the rotating mechanism, also reducing the longitudinal size of the transfer vehicle, and greatly reducing the overall size of the transfer vehicle to make it more flexible to move in the limited space.

In an implementation, a lug boss 52 is provided at a rear end of the outer rod 53; and when the material receiving rod 50 rotates to the docking station 60, the front end of the push-pull rod 311 corresponds to a position of the lug boss 52, and the second driving device 312 drives the front end of the push-pull rod 311 to extend horizontally and push the lug boss 52, to drive the outer rod 53 to move horizontally.

It should be noted that the front end, rear end, front side and rear side in the following are described relative to the docking direction. During docking, the direction toward the target docking position is the front end, and the opposite direction is the rear end.

In the implementation of the present disclosure, the lug boss 52 is configured to cooperate with the push-pull rod 311 to obtain the driving force of the second driving device 312. A magnetic switch, an optical switch, a limit switch or the like may be arranged on the docking station 50 to detect whether the lug boss 52 has reached the docking station 50.

In an implementation, the outer rod 53 includes a plurality of expansion pieces 531 with arc-shaped cross-sections, the expansion pieces 531 have rear ends connected to each other and front ends separated from each other, and the rear ends of the expansion pieces 531 are connected to the lug boss 52. When the outer rod 53 and the inner rod 51 are in a first state relative to each other, the front ends of the plurality of expansion pieces 531 shrink and draw close. When the outer rod 53 and the inner rod 51 are in a second state relative to each other, the front ends of the plurality of expansion pieces 531 move away from each other to increase the diameter of the outer rod 53.

In the implementation of the present disclosure, after the outer rod 53 obtains the material to be transferred (yarn spindle), the yarn spindle is in the shape of a disc with a circular hole in the center. When the circular hole of the yarn spindle is sleeved on the outer rod 53, the diameter of the front end of the outer rod can be enlarged in order to prevent the yarn spindle from slipping. Specifically, when the outer rod is extended for docking (the first state), the diameter of the front end of the outer rod should be less than the diameter of the round hole of the yarn spindle; when the outer rod is retracted (the second state), the diameter of the front end of the outer rod should be greater than or equal to the diameter of the circular hole of the yarn spindle, thereby restricting the yarn spindle on the material receiving rod 50.

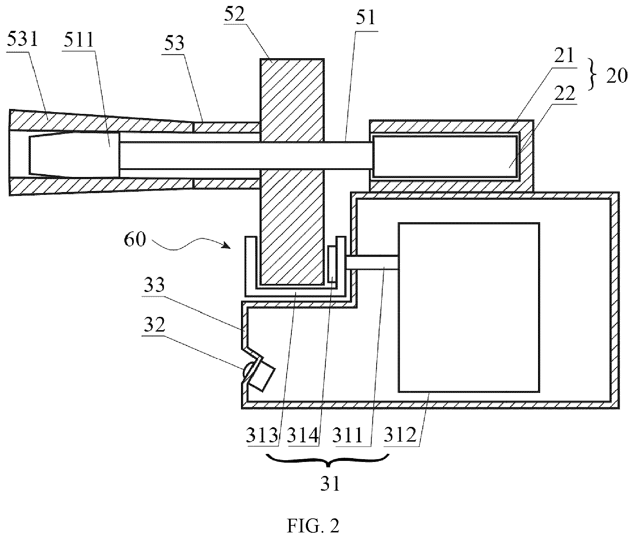

In an implementation, as shown in FIG. 2, the inner rod 51 has a conical portion 511 at its front end, the conical portion 511 is slidably arranged inside the outer rod 53, and the diameter of the conical portion 511 gradually increases from the front end to the rear end. The thickness of the expansion piece 531 gradually decreases from the front end to the rear end, so that the inner diameter of the front end of the outer rod 53 is less than the inner diameter of the rear end. Here, when the rear end of the outer rod 53 slides to the conical portion 511 of the inner rod 51, the outer rod 53 and the inner rod 51 are in the first state relative to each other. When the front end of the outer rod 53 slides to the conical portion 511 of the inner rod 51, the outer rod 53 and the inner rod 51 are in the second state relative to each other.

In the implementation of the present disclosure, the expansion piece of the outer rod cooperates with the conical portion of the inner rod to open and close the expansion piece, thereby changing the diameter of the front end of the outer rod, so that the material receiving rod can fix the yarn spindle on the material receiving rod after obtaining the yarn spindle.

In an implementation, the pushing device 31 further includes a push-pull groove 313 arranged at the front end of the push-pull rod 311, the push-pull groove 313 is arranged parallel to a movement direction of a material receiving rod 50 at the docking station 60, and a lower part of the lug boss 52 of the material receiving rod 50 is placed in the push-pull groove 313 when the material receiving rod 50 moves to the docking station 60.

In the implementation of the present disclosure, the lower part of the lug boss 52 is placed in the push-pull groove 313, so that the push-pull rod can drive the lug boss and the outer rod more stably. In one example, the direction of the groove body of the push-pull groove 313 is parallel to the movement direction of the crawler belt at the docking station, and a limit block 314 may be arranged at a downstream position of the push-pull groove in the movement direction of the crawler belt. The limit block 314 is arranged on the front side or the rear side of the inner surface of the push-pull groove 313, and an opening larger than the width of the lug boss 52 is reserved between the limit block and the opposite side of the push-pull groove. Since the material receiving rod 50 moves along the annular track on a fixed route, the front and rear positions of the push-pull groove 313 can be changed so that the limit block 314 is located on or not on the moving route of the lug boss, to block or release the material receiving rod 50, or to keep the material receiving rod 50 in a fixed position at the docking station 60 to facilitate accurate docking.

In an implementation, the docking auxiliary mechanism 30 includes a first box body 33, the pushing device 31 and the positioning device 32 are arranged in the first box body 33, and the first box body 33 is arranged between the vehicle body 10 and the rotating mechanism 20.

In the implementation of the present disclosure, the first box body 33 is used to accommodate the pushing device and the positioning device, and also serves as a supporting component of the rotating mechanism.

In an implementation, a mounting groove is arranged on a side of the first box body 33 close to a front end of the outer rod 53, the positioning device 32 is arranged on a first inclined surface of the mounting groove, the first inclined surface is arranged toward the front end of the outer rod 53, and the positioning device 32 includes a camera.

In the implementation of the present disclosure, the first inclined surface faces the front end of the outer rod 53, so that the camera installed thereon also faces the front end of the outer rod 53 and thus has a more convenient observation angle and a better field of view when photographing and identifying the target docking position.

In an implementation, a first connecting column is provided between inner circles of the annular track 21, and the first connecting column is connected to the vehicle body 10 through a second connecting column.

In the implementation of the present disclosure, the first connecting column is used to enhance the structural strength of the upper and lower parts of the annular track, and the second connecting column is used to enhance the stability of the entire rotating mechanism in the vertical direction.

In one example, one group including a rotating mechanism 20, a docking auxiliary mechanism 30, a first driving device 40 and a plurality of material receiving rods 50 is arranged on each of both sides of the vehicle body 10 in the short side direction, so that both the left and right sides of the vehicle body 10 can be used for receiving materials, and the material receiving capacity of the transfer vehicle is doubled. The rotating mechanisms 20 in two groups may be connected by a connecting column.

In an implementation, the first driving device 40 is arranged in a second box body between the vehicle body 10 and the rotating mechanism 20.

In the implementation of the present disclosure, the second box body is used to accommodate the first driving device 40, and also serves as a supporting component of the rotating mechanism 20. The annular track 21 and the second box body are opened at the connection position of them, so that the crawler belt 22 is connected to the first driving device 40.

In an implementation, the control mechanism may be arranged in the first box body 33, and the control mechanism is electrically connected to the first driving device 40 and the second driving device 312.

In the description of this specification, it should be understood that the orientations or position relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axis" ", "radial", "circumferential", etc. are orientations or position relationships shown based on the drawings, and are only for the purpose of facilitating the description of the present disclosure and simplifying the description, rather than indicating or implying that the device or element referred to must have a particular orientation or be constructed and operated in a particular orientation, and thus should not be construed as the limitation on the present disclosure.

Moreover, the terms "first" and "second" are only for the purpose of description, and cannot be construed to indicate or imply the relative importance or implicitly point out the number of technical features indicated. Therefore, the feature defined with "first" or "second" may explicitly or implicitly include one or more features. In the description of the present disclosure, "a plurality of" means two or more than two, unless otherwise expressly and specifically defined.

In the present disclosure, unless otherwise expressly specified and limited, the terms such as "install", "couple", "connect" and "fix" should be understood in broad sense. For example, it may be fixed connection or detachable connection or integral connection; may be mechanical connection or electrical connection or communication connection; may be direct connection, or indirect connection through an intermediate medium; may be internal communication between two elements or interaction relationship between two elements. Those having ordinary skill in the art may understand the specific meanings of the above-mentioned terms in the present disclosure according to specific situations.

In the present disclosure, unless otherwise expressly specified and defined, a first feature "above" or "below" a second feature may include: the first and second features are in direct contact, or the first and second features are not in direct contact but in contact through other feature between them. Furthermore, the first feature "above", "on" and "over" the second feature includes: the first feature is directly above and diagonally above the second feature, or simply means that the first feature is higher in level than the second feature. The first feature "below", "under" and "underneath" the second feature includes: the first feature is directly below and diagonally below the second feature, or simply means that the first feature is lower in level than the second feature.

The above description is only the specific embodiments of the present invention, but the protection scope of the present invention is not limited to this. Any person skilled in the art can easily think of various changes or replacements within the protection scope of the present invention. Thus, the protection scope of the present invention should be subject to the protection scope of the claims.

## Claims

1. A transfer vehicle, comprising
a vehicle body (10);
a rotating mechanism (20), comprising an annular track (21) vertically arranged above the vehicle body (10), a crawler belt (22) arranged along an end surface of the annular track (21), and a first driving device (40) connected to the crawler belt (22); wherein the crawler belt (22) is rotatable around the annular track (21) when driven by the first driving device (40);
a plurality of material receiving rods (50) arranged at intervals on a side of the rotating mechanism (20), wherein each material receiving rod (50) comprises an inner rod (51) and an outer rod (53) sleeved on the inner rod (51), and the inner rod (51) is connected to the crawler belt (22);
a docking auxiliary mechanism (30) arranged beside a docking station (60) on the side of the rotating mechanism (20), comprising a pushing device (31) and a positioning device (32), wherein the positioning device (32) is configured to determine an orientation of a target docking position; the pushing device (31) comprises a push-pull rod (311) and a second driving device (312), and a rear end of the push-pull rod (311) is connected to the second driving device (312); when the material receiving rod (50) rotates to the docking station (60), the second driving device (312) drives a front end of the push-pull rod (311) to push the outer rod (53) to move horizontally together, so that the outer rod (53) moves to the target docking position to receive materials to be transferred; and
a control mechanism electrically connected to the vehicle body (10) and the positioning device (32) respectively, and configured to control movement of the vehicle body (10) and adjust a position of the vehicle body (10) according to the orientation of the target docking position so that the docking station (60) is aligned with the target docking position.

2. The transfer vehicle of claim 1, wherein a lug boss (52) is provided at a rear end of the outer rod (53); and when the material receiving rod (50) rotates to the docking station (60), the front end of the push-pull rod (311) corresponds to a position of the lug boss (52), and the second driving device (312) drives the front end of the push-pull rod (311) to extend horizontally and push the lug boss (52), to drive the outer rod (53) to move horizontally.

3. The transfer vehicle of claim 2, wherein the outer rod (53) comprises a plurality of expansion pieces (531) with arc-shaped cross-sections, the expansion pieces (531) have rear ends connected to each other and front ends separated from each other, and the rear ends of the expansion pieces (531) are connected to the lug boss (52); when the outer rod (53) and the inner rod (51) are in a first state relative to each other, the front ends of the plurality of expansion pieces (531) shrink and draw close; when the outer rod (53) and the inner rod (51) are in a second state relative to each other, the front ends of the plurality of expansion pieces (531) move away from each other to increase a diameter of the outer rod (53).

4. The transfer vehicle of claim 3, wherein the inner rod (51) has a conical portion (511) at its front end, the conical portion (511) is slidably arranged inside the outer rod (53), and a diameter of the conical portion (511) gradually increases from its front end to rear end; and a thickness of the expansion piece (531) gradually decreases from its front end to rear end, so that an inner diameter of the front end is less than an inner diameter of the rear end in the outer rod (53); wherein: when the rear end of the outer rod (53) slides to the conical portion (511) of the inner rod (51), the outer rod (53) and the inner rod (51) are in the first state relative to each other; when the front end of the outer rod (53) slides to the conical portion (511) of the inner rod (51), the outer rod (53) and the inner rod (51) are in the second state relative to each other.

5. The transfer vehicle of claim 2, wherein the pushing device (31) further comprises a push-pull groove (313) arranged at the front end of the push-pull rod (311), the push-pull groove (313) is arranged parallel to a movement direction of a material receiving rod (50) at the docking station (60), and a lower part of the lug boss (52) of the material receiving rod (50) is placed in the push-pull groove (313) when the material receiving rod (50) moves to the docking station (60).

6. The transfer vehicle of claim 1, wherein the docking auxiliary mechanism (30) comprises a first box body (33), the pushing device (31) and the positioning device (32) are arranged in the first box body (33), and the first box body (33) is arranged between the vehicle body (10) and the rotating mechanism (20).

7. The transfer vehicle of claim 6, wherein a mounting groove is arranged on a side of the first box body (33) close to a front end of the outer rod (53), the positioning device (32) is arranged on a first inclined surface of the mounting groove, the first inclined surface is arranged toward the front end of the outer rod (53), and the positioning device (32) comprises a camera.

8. The transfer vehicle of claim 1, wherein a first connecting column is provided between inner circles of the annular track (21), and the first connecting column is connected to the vehicle body (10) through a second connecting column.

9. The transfer vehicle of claim 1, wherein the first driving device (40) is arranged in a second box body between the vehicle body (10) and the rotating mechanism (20).

## Patentansprüche

1. Transferfahrzeug, umfassend:
einen Fahrzeugkörper (10);
einen Drehmechanismus (20), der eine ringförmige Bahn (21), die vertikal über dem Fahrzeugkörper (10) angeordnet ist, ein Raupenband (22), das entlang einer Endoberfläche der ringförmigen Bahn (21) angeordnet ist, und eine erste Antriebsvorrichtung (40), die mit dem Raupenband (22) verbunden ist, umfasst; wobei das Raupenband (22) um die ringförmige Bahn (21) drehbar ist, wenn es durch die erste Antriebsvorrichtung (40) angetrieben wird;
eine Vielzahl von Materialaufnahmestangen (50), die in Abständen auf einer Seite des Drehmechanismus (20) angeordnet ist, wobei jede Materialaufnahmestange (50) eine innere Stange (51) und eine äußere Stange (53) umfasst, die auf die innere Stange (51) aufgesteckt ist, und die innere Stange (51) mit dem Raupenband (22) verbunden ist;
einen Andockhilfsmechanismus (30), der neben einer Andockstation (60) auf der Seite des Drehmechanismus (20) angeordnet ist, umfassend eine Schubvorrichtung (31) und eine Positioniervorrichtung (32), wobei die Positioniervorrichtung (32) dazu konfiguriert ist, eine Ausrichtung einer Zielandockposition zu bestimmen; die Schubvorrichtung (31) eine Schub-Zug-Stange (311) und eine zweite Antriebsvorrichtung (312) umfasst, und ein hinteres Ende der Schub-Zug-Stange (311) mit der zweiten Antriebsvorrichtung (312) verbunden ist; wenn sich die Materialaufnahmestange (50) zu der Andockstation (60) dreht, die zweite Antriebsvorrichtung (312) ein vorderes Ende der Schub-Zug-Stange (311) antreibt, um die äußere Stange (53) zu drücken, um sich horizontal zusammen zu bewegen, sodass sich die äußere Stange (53) zu der Zielandockposition bewegt, um zu übertragende Materialien aufzunehmen; und
einen Steuermechanismus, der elektrisch mit dem Fahrzeugkörper (10) beziehungsweise der Positioniervorrichtung (32) verbunden ist und dazu konfiguriert ist, eine Bewegung des Fahrzeugkörpers (10) zu steuern und eine Position des Fahrzeugkörpers (10) gemäß der Ausrichtung der Zielandockposition einzustellen, sodass die Andockstation (60) mit der Zielandockposition ausgerichtet ist.

2. Transferfahrzeug nach Anspruch 1, wobei ein Ansatzvorsprung (52) an einem hinteren Ende der äußeren Stange (53) bereitgestellt ist; und wenn sich die Materialaufnahmestange (50) zu der Andockstation (60) dreht, das vordere Ende der Schub-Zug-Stange (311) einer Position des Ansatzvorsprungs (52) entspricht und die zweite Antriebsvorrichtung (312) das vordere Ende der Schub-Zug-Stange (311) antreibt, um sich horizontal zu erstrecken und den Ansatzvorsprung (52) zu drücken, um die äußere Stange (53) anzutreiben, um sich horizontal zu bewegen.

3. Transferfahrzeug nach Anspruch 2, wobei die äußere Stange (53) eine Vielzahl von Ausdehnungsstücken (531) mit bogenförmigen Querschnitten umfasst, die Ausdehnungsstücke (531) hintere Enden, die miteinander verbunden sind, und vordere Enden aufweisen, die voneinander getrennt sind, und die hinteren Enden der Ausdehnungsstücke (531) mit dem Ansatzvorsprung (52) verbunden sind; wenn die äußere Stange (53) und die innere Stange (51) sich in einem ersten Zustand relativ zueinander befinden, die vorderen Enden der Vielzahl von Ausdehnungsstücken (531) sich verkleinern und sich eng zusammenziehen; wenn sich die äußere Stange (53) und die innere Stange (51) in einem zweiten Zustand relativ zueinander befinden, sich die vorderen Enden der Vielzahl von Ausdehnungsstücken (531) voneinander wegbewegen, um einen Durchmesser der äußeren Stange (53) zu vergrößern.

4. Transferfahrzeug nach Anspruch 3, wobei die innere Stange (51) einen konischen Abschnitt (511) an ihrem vorderen Ende aufweist, der konische Abschnitt (511) verschiebbar innerhalb der äußeren Stange (53) angeordnet ist und ein Durchmesser des konischen Abschnitts (511) von seinem vorderen Ende zu dem hinteren Ende allmählich zunimmt; und eine Dicke des Ausdehnungsstücks (531) von seinem vorderen Ende zu dem hinteren Ende allmählich abnimmt, sodass ein Innendurchmesser des vorderen Endes kleiner als ein Innendurchmesser des hinteren Endes in der äußeren Stange (53) ist; wobei: wenn das hintere Ende der äußeren Stange (53) sich zu dem konischen Abschnitt (511) der inneren Stange (51) verschiebt, sich die äußere Stange (53) und die innere Stange (51) in dem ersten Zustand relativ zueinander befinden; wenn das vordere Ende der äußeren Stange (53) sich zu dem konischen Abschnitt (511) der inneren Stange (51) verschiebt, sich die äußere Stange (53) und die innere Stange (51) in dem zweiten Zustand relativ zueinander befinden.

5. Transferfahrzeug nach Anspruch 2, wobei die Schubvorrichtung (31) ferner eine Schub-Zug-Nut (313) umfasst, die an dem vorderen Ende der Schub-Zug-Stange (311) angeordnet ist, wobei die Schub-Zug-Nut (313) parallel zu einer Bewegungsrichtung einer Materialaufnahmestange (50) an der Andockstation (60) angeordnet ist, und ein unterer Teil des Ansatzvorsprungs (52) der Materialaufnahmestange (50) in der Schub-Zug-Nut (313) platziert ist, wenn sich die Materialaufnahmestange (50) zu der Andockstation (60) bewegt.

6. Transferfahrzeug nach Anspruch 1, wobei der Andockhilfsmechanismus (30) einen ersten Kastenkörper (33) umfasst, die Schubvorrichtung (31) und die Positioniervorrichtung (32) in dem ersten Kastenkörper (33) angeordnet sind und der erste Kastenkörper (33) zwischen dem Fahrzeugkörper (10) und dem Drehmechanismus (20) angeordnet ist.

7. Transferfahrzeug nach Anspruch 6, wobei eine Montagenut auf einer Seite des ersten Kastenkörpers (33) nahe einem vorderen Ende der äußeren Stange (53) angeordnet ist, die Positioniervorrichtung (32) auf einer ersten geneigten Oberfläche der Montagenut angeordnet ist, die erste geneigte Oberfläche zu dem vorderen Ende der äußeren Stange (53) hin angeordnet ist und die Positioniervorrichtung (32) eine Kamera umfasst.

8. Transferfahrzeug nach Anspruch 1, wobei eine erste Verbindungssäule zwischen Innenkreisen der ringförmigen Bahn (21) bereitgestellt ist und die erste Verbindungssäule durch eine zweite Verbindungssäule mit dem Fahrzeugkörper (10) verbunden ist.

9. Transferfahrzeug nach Anspruch 1, wobei die erste Antriebsvorrichtung (40) in einem zweiten Kastenkörper zwischen dem Fahrzeugkörper (10) und dem Drehmechanismus (20) angeordnet ist.

## Revendications

1. Véhicule de transfert comprenant :
un corps de véhicule (10) ;
un mécanisme rotatif (20), comprenant une piste annulaire (21) disposée verticalement au-dessus du corps de véhicule (10), une courroie de chenille (22) disposée le long d'une surface d'extrémité de la piste annulaire (21), et un premier dispositif d'entraînement (40) relié à la courroie de chenille (22) ; dans lequel la courroie de chenille (22) peut tourner autour de la piste annulaire (21) lorsqu'elle est entraînée par le premier dispositif d'entraînement (40) ;
une pluralité de tiges de réception de matériau (50) agencées à intervalles sur un côté du mécanisme rotatif (20), dans lequel chaque tige de réception de matériau (50) comprend une tige interne (51) et une tige externe (53) manchonnée sur la tige interne (51), et la tige interne (51) est reliée à la courroie de chenille (22) ;
un mécanisme auxiliaire d'arrimage (30) disposé à côté d'une station d'arrimage (60) sur le côté du mécanisme rotatif (20), comprenant un dispositif de poussée (31) et un dispositif de positionnement (32), dans lequel le dispositif de positionnement (32) est configuré pour déterminer une orientation d'une position d'arrimage cible ; le dispositif de poussée (31) comprend une tige de poussée et traction (311) et un second dispositif d'entraînement (312), et une extrémité arrière de la tige de poussée et traction (311) est reliée au second dispositif d'entraînement (312) ; lorsque la tige de réception de matériau (50) tourne vers la station d'arrimage (60), le second dispositif d'entraînement (312) entraîne une extrémité avant de la tige de poussée et traction (311) pour pousser la tige externe (53) à se déplacer horizontalement ensemble, de sorte que la tige externe (53) se déplace vers la position d'arrimage cible pour recevoir des matériaux à transférer ; et
un mécanisme de commande connecté électriquement au corps de véhicule (10) et au dispositif de positionnement (32) respectivement, et configuré pour commander le déplacement du corps de véhicule (10) et ajuster une position du corps de véhicule (10) en fonction de l'orientation de la position d'arrimage cible de sorte que la station d'arrimage (60) soit alignée avec la position d'arrimage cible.

2. Véhicule de transfert selon la revendication 1, dans lequel un bossage de patte (52) est prévu à une extrémité arrière de la tige externe (53) ; et lorsque la tige de réception de matériau (50) tourne vers la station d'arrimage (60), l'extrémité avant de la tige de poussée et traction (311) correspond à une position du bossage de patte (52), et le second dispositif d'entraînement (312) entraîne l'extrémité avant de la tige de poussée et traction (311) pour qu'elle s'étende horizontalement et pousse le bossage de patte (52), pour entraîner la tige externe (53) à se déplacer horizontalement.

3. Véhicule de transfert selon la revendication 2, dans lequel la tige externe (53) comprend une pluralité de pièces d'expansion (531) avec des sections transversales en forme d'arc, les pièces d'expansion (531) ont des extrémités arrière connectées les unes aux autres et des extrémités avant séparées les unes des autres, et les extrémités arrière des pièces d'expansion (531) sont connectées au bossage de patte (52) ; lorsque la tige externe (53) et la tige interne (51) sont dans un premier état les unes par rapport aux autres, les extrémités avant de la pluralité de pièces d'expansion (531) se rétractent et se rapprochent ; lorsque la tige externe (53) et la tige interne (51) sont dans un second état les unes par rapport aux autres, les extrémités avant de la pluralité de pièces d'expansion (531) s'éloignent les unes des autres pour augmenter un diamètre de la tige externe (53).

4. Véhicule de transfert selon la revendication 3, dans lequel la tige interne (51) a une partie conique (511) à son extrémité avant, la partie conique (511) est agencée de manière coulissante à l'intérieur de la tige externe (53), et un diamètre de la partie conique (511) augmente progressivement de son extrémité avant à son extrémité arrière ; et une épaisseur de la pièce d'expansion (531) diminue progressivement de son extrémité avant à son extrémité arrière, de sorte qu'un diamètre intérieur de l'extrémité avant soit inférieur à un diamètre intérieur de l'extrémité arrière dans la tige externe (53) ; dans lequel : lorsque l'extrémité arrière de la tige externe (53) coulisse vers la partie conique (511) de la tige interne (51), la tige externe (53) et la tige interne (51) sont dans le premier état l'une par rapport à l'autre ; lorsque l'extrémité avant de la tige externe (53) coulisse vers la partie conique (511) de la tige interne (51), la tige externe (53) et la tige interne (51) sont dans le second état l'une par rapport à l'autre.

5. Véhicule de transfert selon la revendication 2, dans lequel le dispositif de poussée (31) comprend en outre une rainure de poussée et traction (313) agencée à l'extrémité avant de la tige de poussée et traction (311), la rainure de poussée et traction (313) est agencée parallèlement à une direction de déplacement d'une tige de réception de matériau (50) au niveau de la station d'arrimage (60), et une partie inférieure du bossage de patte (52) de la tige de réception de matériau (50) est placée dans la rainure de poussée et traction (313) lorsque la tige de réception de matériau (50) se déplace vers la station d'arrimage (60).

6. Véhicule de transfert selon la revendication 1, dans lequel le mécanisme auxiliaire d'arrimage (30) comprend un premier corps de caisse (33), le dispositif de poussée (31) et le dispositif de positionnement (32) sont agencés dans le premier corps de caisse (33), et le premier corps de caisse (33) est agencé entre le corps de véhicule (10) et le mécanisme rotatif (20).

7. Véhicule de transfert selon la revendication 6, dans lequel une rainure de montage est agencée sur un côté du premier corps de caisse (33) à proximité d'une extrémité avant de la tige externe (53), le dispositif de positionnement (32) est agencé sur une première surface inclinée de la rainure de montage, la première surface inclinée est agencée vers l'extrémité avant de la tige externe (53), et le dispositif de positionnement (32) comprend une caméra.

8. Véhicule de transfert selon la revendication 1, dans lequel une première colonne de connexion est prévue entre les cercles intérieurs de la piste annulaire (21), et la première colonne de connexion est connectée au corps de véhicule (10) par l'intermédiaire d'une seconde colonne de connexion.

9. Véhicule de transfert selon la revendication 1, dans lequel le premier dispositif d'entraînement (40) est agencé dans un second corps de caisse entre le corps de véhicule (10) et le mécanisme rotatif (20).
